## Europäisches Patentamt

## European Patent Office

## Office européen des brevets

(19)

(11) Publication number: **0 045 270**

**A1**

(12)

# EUROPEAN PATENT APPLICATION

(21) Application number: **81401226.6**

(22) Date of filing: **29.07.81**

(51) Int. Cl.³: **C 01 G 25/04, C 01 G 27/04**

(30) Priority: **30.07.80 JP 105298/80**
**30.07.80 JP 105299/80**
**30.07.80 JP 105300/80**
**17.11.80 JP 160830/80**

(43) Date of publication of application: **03.02.82**
**Bulletin 82/5**

(84) Designated Contracting States: **DE FR GB SE**

(71) Applicant: **Ishizuka, Hiroshi, 19-2, Ebara 6-chome Shinagawa-ku, Tokyo (JP)**

(72) Inventor: **Ishizuka, Hiroshi, 19-2, Ebara 6-chome Shinagawa-ku, Tokyo (JP)**

(74) Representative: **Nony, Michel, Cabinet Nony 29, rue Cambacérès, F-75008 Paris (FR)**

(54) **Process for separation of zirconium- and hafnium tetrachlorides from a mixture comprising such chlorides and apparatus therefor.**

(57) A process for separation of zirconium- and hafnium tetrachlorides from a mixture comprising such chlorides, the process comprising :

    introducing said mixture of tetrachlorides into a closed system;

    heating at a vaporization zone (2), the mixture, which exists as liquid at least partially, to a temperature of at least approximately 440°C under a pressure of at least 25 atms. to cause generation and upward flow of vapor;

    at a condensation zone (4) over said vaporization zone, continuously condensing and flow down a substantial part of ascending vapor back to the vaporization zone (2), thus transferring hafnium tetrachloride gradually to a remaining small part vapor;

    removing the vapor phase as enriched in hafnium tetrachloride from the system;

    maintaining the pressure condition substantially throughout the vaporization; and

    recovering from the vaporization zone (2) zirconium tetrachloride substantially of hafnium content.

The present invention relates to a process for separation of zirconium- and hafnium tetrachlorides from a mixture comprising such chlorides each to a purity level sufficient to reactor engineering applications. The invention also relates to an apparatus to effectively carry out such process.

As commonly known, zirconium and hafnium metals find the primary use in nuclear engineering as materials for fuel casing and reaction control element, respectively, mainly due to their property against thermal (slow) neutron emission. For such applications it is required that zirconium contain not in excess of 0.01%, while hafnium contain zirconium not in excess of 3%.

A lot of processes have been proposed for separation of zirconium and hafnium metals to the specified purity level, but very few have been put in an industrial practice. A typical one in use is a wet process in which separation is effected by means of an organic extractive medium such as methyl-isobutyl-ketone (MIBK) and rhodanate. Since the process involves use of expensive chemicals in addition to rather complicated cycle comprising dissolving crude zirconium tetrachloride, which contains hafnium, into water, extracting off hafnium tetrachloride from the solution where zirconium tetrachloride is left, converting the latter to oxide of the metal, and again chlorinating the oxide, resulting metal products are rather expensive. Such drawback

- 1 -

may be overcome or minimized by some of dry processes proposed in literature and claimed to effectively separate hafnium tetrachloride from zirconium tetrachloride by means of a little difference in vapor pressure. A few examples are: a fractional sublimation process run under a normal pressure as disclosed in U.S. Patent No. 3,856,477, a distillation process under a substantially elevated pressure, as described in U.S. Patent No. 2,852,446 and a process in which a crude chloride is dissolved in and vaporized from a mixed salt of such chloride with a chloride of alkaline metal as described in U.S. Patent No. 2,744,060. None of them have yet been industrially employed successfully because of problems rising in adaptation, although they may be effective on an experimental scale.

Therefore an object of the invention is to provide a process successfully conductable on an industrial scale for separation of zirconium- and hafnium tetrachlorides from each other.

Another object is to provide a simplified process which permits an overall economy in production of either zirconium- or hafnium metals, especially of an impurity level (regarding hafnium and zirconium concentrations, respectively) required for reactor applications.

Another object is to provide an apparatus especially suitable for practice of such process.

According to the invention there is provided a process for separation of zirconium- and hafnium tetrachlorides from a mixture comprising such chlorides, the process comprising: introducing said mixture of tetrachlorides into a closed system;

heating at a vaporization zone, the mixture, which exists as liquid at least partially, to a temperature of at least approximately 440°C under a pressure of at least 25 atms. to cause generation and upward flow of vapor;

at a condensation zone part over said vaporization zone, continuously condensing and flow down a substantial part of ascending vapor back to the vaporization zone, thus transferring hafnium tetrachloride gradually to a remaining small part vapor;

removing the vapor phase as enriched in hafnium tetrachloride from the system;

maintaining the pressure condition substantially throughout the vaporization; and

recovering from the vaporization zone zirconium tetrachloride substantially removed of hafnium content.

According to the invention there is also provided an apparatus for separation of zirconium- and hafnium tetrachlorides from a mixture thereof, which apparatus comprises:

a vaporizer which consists substantially of a closed pot provided with a heating means;

a condenser column of a substantially cylindrical

4

configuration which provides inwards a space for partial condensation communicating at a lower end thereof with said pot;

a colder face of a substantially cylindrical configuration and provided with a cooling means adjacent to- and behind said face relative to the condensation space;

an enclosure of thermal insulative material for the pot-column combination;

flow-regulatable tube means each for feeding crude chloride mixture, for vapor removal atop the column, and for recovery of purified zirconium tetrachloride on the pot; and

a pressure resistance means for the pot-column combination.

In said process of the invention separation of zirconium- and hafnium tetrachloride is substantially effected through a differential partial condensation under an elevated pressure-temperature condition where such chlorides can exist in liquid state. Combined pressure-temperature conditions used here are either one of temperature of at least approximately 450°C and a pressure of at least 25 atms. when especially directed to production of zirconium tetrachloride for reactor grade metal, that is, of a hafnium concentration level required for reactor engineering applications, or one of a temperature of at least 440°C, approximately, and a pressure of at least

0045270

5

40 atms. as for production of a metal of a reactor grade zirconium concentration level.

Throughout the distillation process a small amount of vapor, relative to the whole generation, is removed from the system as enriched in hafnium content, either continuously or intermittently, through a top portion of condensation space, while the remaining substantial part of ascending vapor is continously condensed to liquid with a cooling means, making a reflux to a vaporization zone beneath. The amounts of vapor removal and condensation are so regulated that a substantially constant pressure is maintained in the system through the run, the ratio in volume of removed/condensed vapor being kept at a considerably decreased level.

A crude chloride mixture can be fed to a vaporization zone or an adjacent portion of the condensation zone, but preferably to an intermediate level of the condensation zone to prevent possible troubles rising when product is recovered from the vaporization zone as detailed later.

Crude chloride of zirconium, as usual, is obtained from a treatment of ores in the presence of coke in a chlorinating process, and keeps as impurities chlorides of such metals as aluminium and iron, sometimes in excess of 0.1%, in addition to hafnium in question. The first two chlorides are difficult to remove by a regular fractional

- 5 -

sublimation, and when aluminum (tri)chloride, especially exists together with hafnium tetrachloride, in spite that both of which exhibit in themselves a lower vaporization point than zirconium tetrachloride, they can be eliminated unsuccessfully or only at a substantially lowered efficiency. This drawback has been found to be overcome by treating such crude chloride with at least one specific halides, particularly, of alkaline metals, prior to the introduction to the system. The halides found to be effective are among the group consisting of sodium-, potassium- and lithium chlorides, sodium- and potassium fluorides, and sodium- and potassium iodides, especially sodium- and/or potassium chlorides.

In the apparatus of the invention, on the other hand, the colder face to make reflux and to partially define a space in which condensation is effected may be provided either on an inner face of column or inside- and spaced from the column face. In the first case the column wall face itself may form the colder face. In case of provision as a separate body the colder face is placed substantially coaxially and parallel with the inner face of column wall, which is straight-cylindrical or, alternatively, weak-tapered cylindrical, upwards or downwards. The space bordering with the colder face may be spirally partitioned to provide and increased path for up-flowing vapor and down coming liquid condensate. The colder face has a cooling means for holding the face below the dew point of zirconium tetrachloride under the applied pressure. The cooling means may be a cavity in an outer jacket on the column or such inside the cylinder to form the colder face, through which a cold gas, such as nitrogen, for example, is forcibly passed. In the twin-cylinder configuration the face opposing the colder face may have a means to hold such face above the vaporization point of hafnium tetrachloride so as to serve as a hotter face. Then a spiral partition is preferably provided with a down inclination towards- and ending on the hotter face to form a V-shaped spiral channel on- and along the hotter face for downcoming condensate. Further the channel can be of a design to partially squeeze the flow with a series of partial blockade along the length. In order to impart the pot and column resistance to the pressure inside, the members themselves are constructed in a stout design. Alternatively, they are encapsulated or enclosed with a separate protective container at least partially, at the pot especially. The container most preferably holds inside the heating means, thermal insulative enclosure as well as the pot-column combination, and is provided with a means for regulating a pressure inside the container to a level substantially equal to- or a little lower than that inside the combination, so that the pot and column may be unloaded, substantially or to some degree, of a pressure difference of at least 25 atms.

0045270

from the atmosphere. Such construction is favorable for heat economy and compactness of the general assembly to be achieved.

The process of the invention takes the advantage of the differential partial condensation as well as some effect of mass transfer during vapor-liquid contact for separation of zirconium- and hafnium tetrachlorides from each other. A partial condensation of this kind has been discovered to be very useful here in the specified pressure-temperature range. The reason for such utility may be attributed to, first, a ratio of vapor/liquid volume present in the condition as small as 15 parts to 1, considerably decreased relative to ordinary distillations and a rather high viscosity the liquid exhibits, resulting in a very limited mass transfer between the vapor and liquid phases; and second, that the ratio of vapor pressures between hafnium- and zirconium tetrachloride is as great as 2 to 1. The effectiveness of the differential partial condensation can be readily observed as well as an additional effect of the countercurrent contact between the two phases.

Other features and advantages of the invention will be better understood from the following description taken in connection with the accompanying drawing, in which:

Figure 1 is a diagramatic illustration of a whole system for production of purified zirconium and hafnium

- 8 -

metals from their mixed chlorides through the process of the invention.

Figure 2 sectionally shows a few of preferred variations of apparatus suitable for practizing the process and formed according to the invention.

Figure 3 shows detailed sectional views of variations of column consturction.

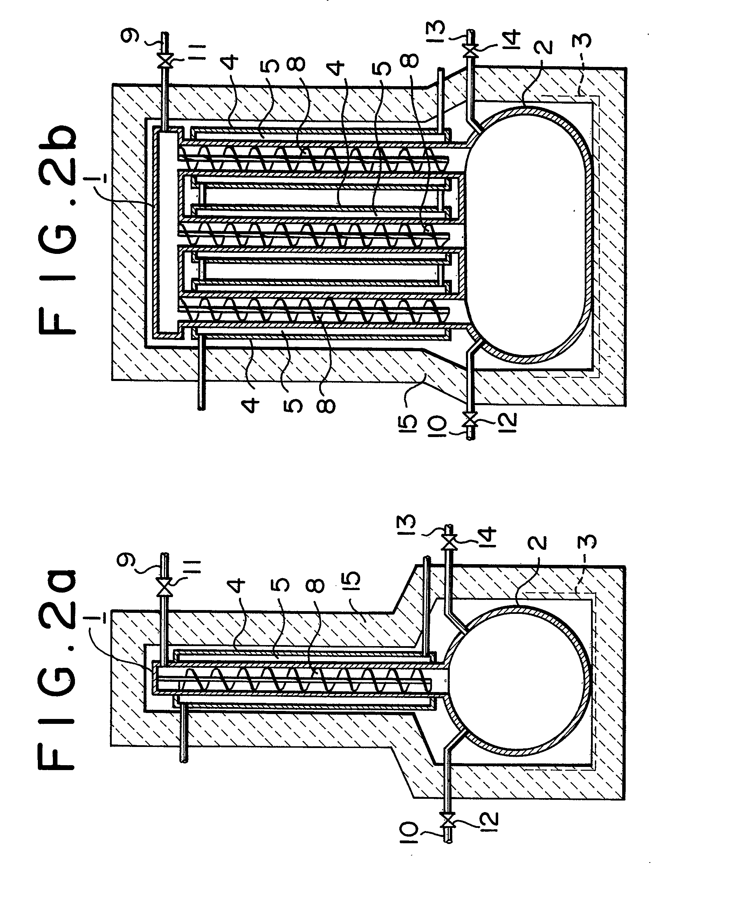

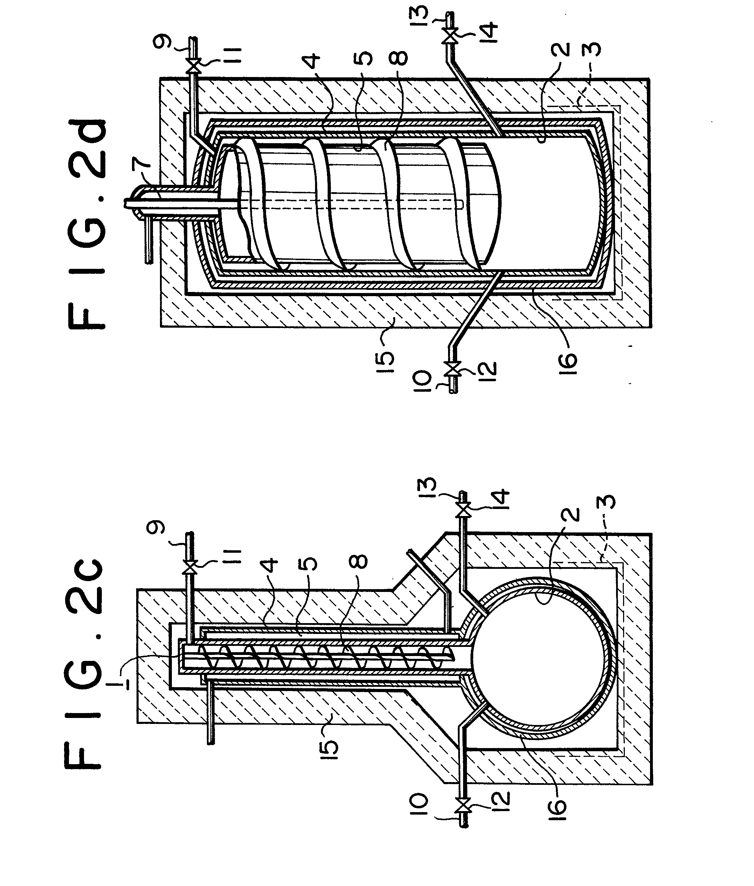

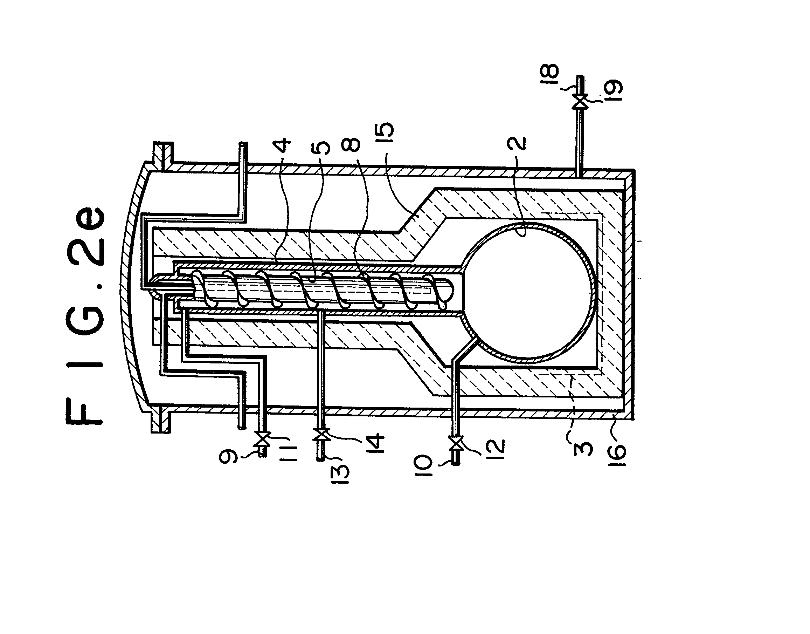

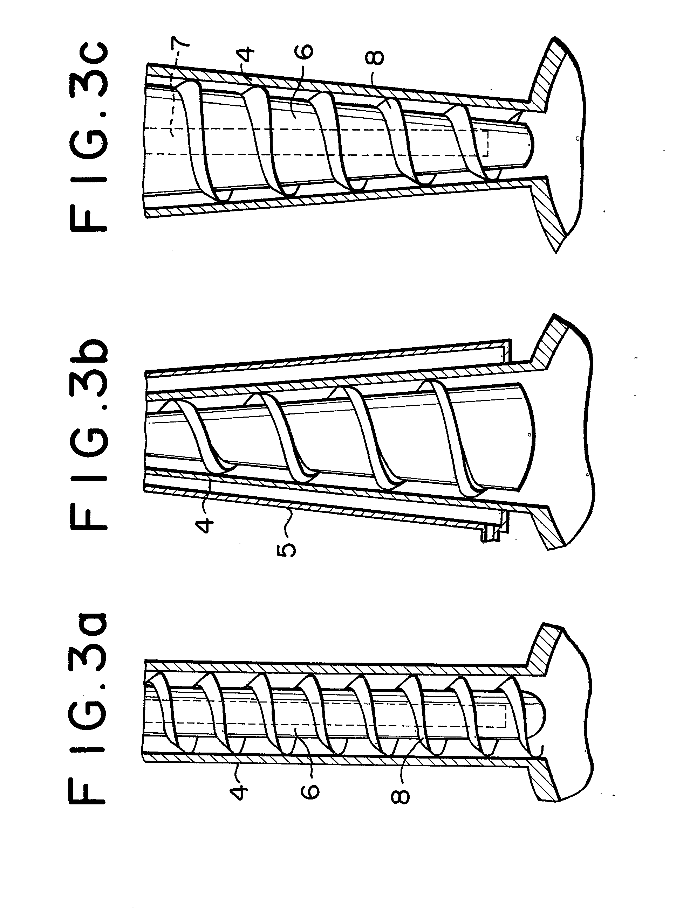

In each figure, especially Figures 2a ~ 2e, functionally corresponding components are designated at common reference numerals. A distillatory tower generally designated at 1, essentially consists of a lower portion forming a still or vaporizer pot 2 provided with a heater 3, which is usually electrical, and an elongated upper portion to form a condenser column 4, the both being spatially communicated. The column 4 has a cooling means such as a cavity, through which a coolant gas of nitrogen, for example, is forcibly passed, outside a column wall and defined by a jacket 5 or inside a hollow cylinder 6 with an inlet tube 7 to provide a colder face on respective body. The column is preferably sectioned with a spiral partition 8 to provide an increased path for the vapor and liquid condensate, though such partition can be saved in case of a sufficiently elongated column construction. When a second face is provided on the column wall or the inner cylinder to serve as a hotter face in the column, the spiral partition 8 may be advantageously so designed

10

to form a down inclination towards such faces to which the partition 8 is attached as particularly shown in Figures 3a and 3c so as to make most of vapor-liquid contact. Tubes 9, 10 with valves 11, 12 are connected to a top portion of the column 4 and the pot 2, respectively, for removal of hafnium tetrachloride enriched chloride vapor and for recovery of purified zirconium tetrachloride. For feeding crude zirconium chloride to the tower 1, a tube 13 with a valve 14 is attached to either an intermediate level of the column 4 or the pot 2 (Figures 2a ~ 2e). The pot-column combination is placed in an enclosure 15 of a thermal insulative material such as ceramic fibre for ease of temperature control. The column 4 may be substantially a cylinder, straight (Figures 2a~2e and Figure 3a) or tapering upwards Figure 3b or downwards Figure 3c. Such cylinders often has a considerably decreased horizontal cross section in general relative to the pot 2 which is rather spheroidal (Figures 2a~2c and 2e) but in some cases the column 4 is also formed as an upper portion of a vessel 16 which is generally straight cylindrical of a cross section and has another cylinder 6 inside to form serve as the colder face or the hotter face. A single column is jointed to the column 4 (as Fig. 2a, 2c and 2e), while, alternatively, several similar columns may be jointed to a common still pot 2 (Fig. 2b). For a safe operation and prevention from

_/_/

possible leakage of environment pollutant such as the chlorides, the pot and column members of the tower essentially have a stout construction of a thick-walled plate of steel, for example. In case such members are encapsulated as a whole or partially enclosed in a protective container 17 of a stout construction, the members, the pot 2 especially, may be more effectively protected against any leakage of the harmful gas through accidentally formed corrosion holes. Such protective container 17 is preferably so designed to hold inside the heater 3 and insulative enclosure 15 in addition to the pot-column combination, for an improved heat economy. In a more preferred arrangement the protective container 17 is provided with a means to regulate the pressure within through a tube 18 with a control valve 19.

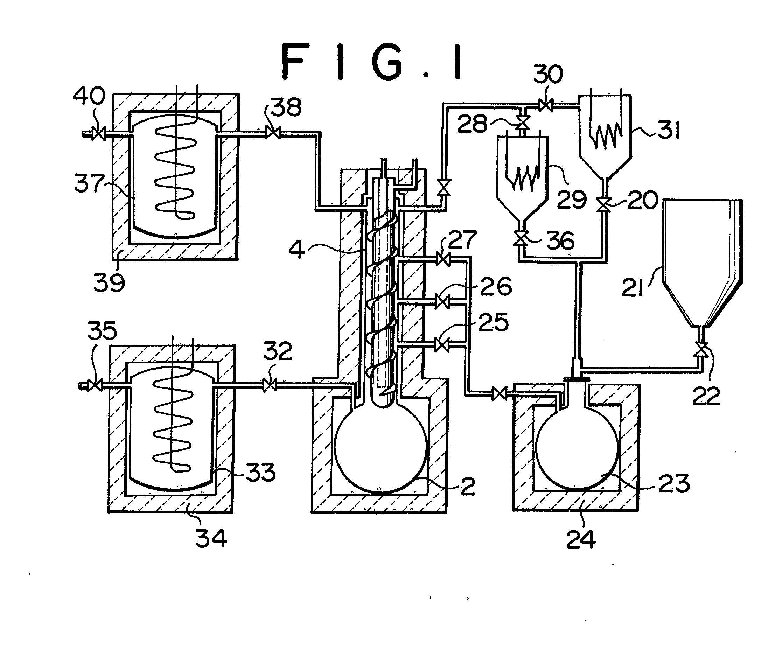

A distillatory tower 1 of each arrangement shown above may be used for production of purified zirconium and hafnium metals through the process as comprised in the system illustrated in Figure 1, where zirconium tetrachloride of a considerably decreased hafnium tetrachloride level, preformed and held in the pot 2 of a distillatory tower 1, is heated with a heater 3 to be liquified and then vaporized in preparation for introduction of crude zirconium tetrachloride. A coolant gas such as nitrogen is passed through a cavity of a cylinder 6 in the condenser column 4, so as to provide a colder face in the

- 11 -

*12*

vicinity of which a substantial part of upcoming vapor is condensed to liquid, making a reflux along a spirally sectioning partition 8 down back to the vaporizer pot 2. Only a small part of vapor phase is removed from the tower 1 continuously or intermittently through a tube with a valve 11. The removal and condensation of vapor is so regulated to establish an equilibrium at a temperature and pressure employed. By the time of equilibrium establishment in the tower 1, a measured amount of crude zirconium chloride of a hafnium level in the order of 2 percent, has been transferred from a storage tank 21 through a valve 22 to another vaporizer pot to be held in solid state. The crude chloride in the pot 23 is heated with a furnace 24 to be vaporized and fed to the tower 1 through valves at an intermediate level of the column 4. The introduction can be practised in such ways that:  a given batch amount of crude chloride is put into the column at one level and is subjected to distillation with the feed discontinued; second, the crude chloride is introduced at a gradually lowering level by switching, for example, by means of valves 25, 26 and 27, as the hafnium chloride concentration in the crude chloride decreases with proceeding vaporization in the pot 23; and third, the crude chloride is continuously fed slowly while gradually removing zirconium tetrachloride as lowered in hafnium concentration from the pot so as to maintain the equilibrium there in the tower. Particularly in the first case an improved productivity may be achieved by loading the first vaporizer pot 23 with another batch of crude chloride in preparation for the next run after the pot is sufficiently cooled down; and in the second case, a continuous run is achivable by using several pots provided in parallel.

Anyway, vapor taken out of the tower at a top portion exhibits an enriched hafnium tetrachloride content and the vapor is led through a valve 28 to a reservoir tank 29 where it is condensed for storage. The vapor takeoff can be practised in such ways that: first, in connection the first mentioned practice of crude chloride introduction, the vapor is taken, as hafnium chloride enriched, at substantially a regular rate after a given amount of crude zirconium chloride of a rather decreased hafnium level is placed in the pot 2 of tower 1 with the ratio of hafnium levels between the removed vapor and the liquid in the pot 2 substantially constant. In a second case, after the crude chloride is charged as in the first case, the vapor is removed at a rate so decreasing as to exhibit a substantially regular concentration of hafnium chloride, while the overall vapor production is maintained at a given rate, such operation being useful particularly for production of hafnium tetrachloride of an raised purity. In another instance where the distillatory tower has a sufficiently large capacity, the vapor is taken at such a rate that allows a substantially regular hafnium chloride level (approximately 30%, for example), while zirconium chloride decreased in hafnium level is continuously removed as liquid or vapor out of the pot.

In the meantime a vapor substantially reduced in zirconium chloride concentration is led through a valve 30 to another reservoir tank 31 for storage. The tank 29 receives such vapor from repeated runs to a given fullness of content, while the chloride in the tank 31 is charged in the vaporizer pot 23 through a valve 20 and treated again as mixed with crude chloride.

A liquid in the vaporizer pot 2 exhibits a lowering hafnium level with a proceeding vaporization and the vaporization is continued until the impurity level becomes smaller than 0.01%, as required for reactor application. When the criterion is met the liquid is transferred through a valve 32 to a reservoir tank 33 for storage. The purified zirconium tetrachloride thus accumulated is then heated for sublimation to vapor with a furnace 34 and led through a valve 35 to a reduction process with magnesium metal to be converted to spongy zirconium metal. The chloride of high hafnium level, as accumlated to a given fullness of the tank 29, is placed in the vaporizer pot 23 through a valve 36, and then transferred to the vaporization pot 2 of the tower 1, as described above, and similarly treated to above for recovery of hafnium tetrachloride vapor of a zirconium level lower than 3%, which is deposited for storage in a reservoir tank 37 through a valve 38 from the top portion of the column 4. When accumulated to a sufficient amount, such chloride is heated with a furnace 39 to a vapor, which is placed through a valve 40 in a reaction vessel (not shown) for treatment with molten magnesium metal to convert to spongy hafnium metal.

In case crude zirconium chloride is directly placed to the vaporizer pot of the column 4 a trouble is occasionally encountered that when the purified zirconium tetrachloride in the pot 2 is heated for discharge after the distillation run is completed the product exhibits again increased hafnium chloride concentration. The reason can be estimatedly attributed to decomposition of its complex compound with a pot material possibly having formed at an early introduction of the crude chloride. This is seen not happen when the crude chloride introduction is at an intermediate level of the column as set forth above, especially to a tower where an equilibrium has been so established to carry out a partial condensation for reducing hafnium chloride level in the vapor phase to a level 0.01 time as low as the liquid in the pot; and at recovery the purified (hafnium lowered) zirconium chloride is partially left in the pot, which is found to be effective to prevent any decomposition of possibly formed compounds of hafnium.

/16

Example 1

A distillatory tower arrangement as shown in Fig. 2a is employed. The tower 1 consists of a pot portion which is spherical at a 2 m I.D., 65 mm thick and made of steel of SB-56M (according to JIS designation), and a tower portion which is substantially cylindrical with a 250 mm I.D., a 30 mm wall thickness and a 5 m length, and is made of steel material of STB-30 grade. The column has a spiral partition inside of a 250 mm pitch and is attached with three tubes with valves each at different levels of the column: approximately $\frac{1}{4}$, $\frac{1}{2}$ and $\frac{3}{4}$ of the general height.

Six tons of crude zirconium tetrachloride, which contains hafnium tetrachloride at a 2% impurity level, is introduced at a rate of 100 Kg/hr. to the tower at through the lowest tube. In the tower operation conditions have been so established at a temperature of 470°C, a pressure of 36 atoms., vaporization rate of 600 Kg/hr. in the pot, vapor removal rate of 10 Kg/hr. from the top of the column by means of a left-over liquid from the previous run, before the crude chloride is charged. The whole introduction takes 60 hours; the vapor taken during such time from the column top exhibits a hafnium level of approximately 20% on an average, while the chloride left in the pot, 0.2% in metal percentage by weight. Then with the valve on the line between the crude chloride tank and the

/7

tower closed, the tower is operated for 80 hours at a vaporization rate of 600 Kg/hr. vapor takeoff at the column top of 6 Kg/hr.; resulting chloride product in the pot exhibits a hafnium level of 0.002%. Some 90% of the liquid chloride is transferred to a storage tank for reduction process. Later in the distillation the pot is cooled down and charged with another six tons of crude zirconium tetrachloride for the next distillation run.

Example 2

The apparatus used in Example 1 is again used.

Six tons of crude zirconium tetrachloride of approximately 2% hafnium level is vaporized in the pot and supplied at 60 Kg/hr. to a tower which is in operation at a vaporization rate of 600 Kg/hr. at its still pot, a vapor removal rate of 6 Kg/hr. at the column top, and a temperature of 470°C and a pressure of 36 atms. The first third approximately of charge is made through the top inlet, the second third through the middle inlet and the last third, through the bottom inlet (at some $\frac{1}{4}$ of general height of the tower), switching by means of each valve. Thus the vapor, taken from the column top, exhibits some 30% hafnium level, while the chloride left in the still pot shows a hafnium level as low as some 0.05%.

Example 3

An apparatus of the arrangement substantially shown in Figure 2c is employed, where the still pot is provided

/18

with a protective container. The tower essentially consists of a lower portion of an eccentrical double spheroidal configuration, of which the inner one serves as still pot, while the outer one, as pressure-protective container for the former. Made of a steel of SS-41 grade (JIS), the pot has an I.D. of 1.9 m and a wall thickness of 50 mm. The column portion is straight-cylindrical, 250 mm in I.D., 30 mm in wall thickness and 5 m in length, with a cooling jacket 10 mm thick of steel around, and a spiral partition of steel 20 mm thick at a pitch of 250 mm. The protective enclosure is made of an SB-56 grade steel, 2 m in I.D. and 65 mm in wall thickness.

Five tons of crude zirconium tetrachloride of a 2% hafnium level is evaporated in a separate vaporizer, supplied to the tower at the still pot and subjected to distillation with partial condensation at 460°C and 33 atms. with vaporization rate of 500 Kg/hr. and vapor removal rate at the column top of 10 Kg/hr. for 50 hours. The chloride recovered from the still pot exhibits a hafnium level as low as 0.003%.

In this case the tower is effective for over 50 runs without any need of substantial repairment, as compared with a safety number in the order of 20 runs with the arrangement of Figure 2a without such protective enclosure.

Example 4

A tower of the arrangement in Figure 2e with a

/9

protective container. In the cylindrical container of steel, 3 m in I.D., 8 m in length and 50 mm wall thickness, there is placed a tower, of which a still pot portion is made of SB-56 steel and spheroidal 2 m in I.D. and 25 mm in wall thickness, while a tower portion consists of an STB-30 steel cylinder of a 350 mm I.D. and a 5 m length., and 9 mm in thickness. An inner cylinder of a 270 mm I.D. and a 30 mm thickness is provided to form a colder face on. The space between the column and inner cylinder is sectioned with a partition spirally at a pitch of 250 mm attached to the column face.

Five tons of crude chloride of zirconium tetrachloride-33% hafnium tetrachloride is charged in the separate vaporizer and is transferred to the still pot of the tower where the chloride is subjected to a distillation under 450°C and 50 atms. at a vaporization rate at the still of 500 Kg/hr. and a vapor removal rate at the column top of 5 Kg/hr. initially and 2 Kg/hr. finally. As a result one ton of hafnium chloride enriched vapor is recovered which exhibits a zirconium level of as low as some 3%. Throughout the run a pressure inside the container is maintained at 35 atms.

Example 5

The apparatus used in Example 3 is used.

As vaporized in a separate vaporizer, five tons of crude zirconium tetrachloride of a 2% hafnium level is introduced to the tower where the chloride is subjected

*20*

to distillation under 470°C and 36 atms. at a still pot vaporization rate of 300 Kg/hr. and a vapor removal rate at the column top of 5 Kg/hr. for 60 hours. The chloride left in the still pot exhibits a hafnium level of as low as 0.003%.

Example 6

A crude zirconium tetrachloride is obtained from chlorination process of baddeleyite which contains some 2% hafnium. The crude chloride is found to contain 0.1 ~ 0.2% aluminum and as much iron additionally. Five tons of such chloride is mixed with 50 Kg of sodium chloride in a separate vaporizer and is heated to form a molten double salt, which is further heated to be vaporized. $4\frac{1}{2}$ tons of such chloride vapor is placed in a still pot of a tower as in Example 1. At this stage of the cycle the concentrations of $A\ell$ and Fe is found to be 100~200 ppm. The chloride, after liquification, is subjected to a distillation under 460°C and 36 atms. at a still pot vaporization rate of 500 Kg/hr. and a column top vapor removal rate of 10 Kg/hr. until the accumulated vapor amounts to 2 tons. The liquid in the still exhibits a hafnium level of 0.008%. After 2.5 tons of liquid is vaporized and passed in a comelt of $NaC\ell$ and $KC\ell$, the hafnium level in the vapor has reduced to 50 ppm.

Reference

The same crude chloride as in Example 6 is used as a starting material for comparison. Five tons of such chloride is likewise charged in a vaporizer and is subjected to a distillation under the identical conditions until a total amount of 3000 Kg of vapor is removed from the column top. In this case the hafnium level of the liquid is as high as 0.02%.

Example 7

Five tons of such crude chloride as in Example 6 is introduced as vapor to a still pot comprised in a distillatory tower for partial condensation. The tower is operated at substantially identical conditions to that in Example 6 until 1000 Kg of accumulated vapor is removed. After the chloride in the pot is vaporized and is passed through a co-melt of $NaC\ell$ and $KC\ell$, the hafnium and aluminum levels are found as 50 and 100 ppm, respectively, well meeting the reactor specifications.

In practice of this example, when the chloride vapor is not passed, the aluminum level is as high as 1%, the hafnium level being identical to above.

Example 8

The practice of Example 7 is repeated after 5.5 tons of crude chloride is charged in a vaporizer together with 50 Kg of $NaC\ell$, heated to produce 5 tons of vapor which is introduced to a distillatory tower and then liquified. The hafnium level at this stage is 200 ppm.

Then the tower is operated under the same conditions

- 21 -

0045270

22

as in Example 7 until removed vapor at the top column accumulates to 500 Kg. The resulting hafnium and aluminum level of the chloride are less than 50 ppm and 200 ppm, respectively, while after the chloride is passed as vapor through a co-melt of NaC$\ell$ and KC$\ell$ the aluminum level has reduced to less than 50 ppm, meeting specification for reactor grade zirconium.

Throughout in the above description the process parameters as well as the apparatus arrangement are given merely for the purpose of illustration and should not be considered as limitative for the invention. On the other hand, the wording "level" or "concentration" referred to in relation to the impurity of metal or chloride, commonly means such content as calculated in impurity metal percent relative to the combined weight of metal.

CLAIMS :

1.    A process for separation of zirconium- and hafnium tetrachlorides from a mixture comprising such chlorides, the process comprising:

introducing said mixture of tetrachlorides into a closed system;

heating at a vaporization zone, the mixture, which exists as liquid at least partially, to a temperature of at least approximately 440°C under a pressure of at least 25 atms. to cause generation and upward flow of vapor;

at a condensation zone over said vaporization zone, continuously condensing and flow down a substantial part of ascending vapor back to the vaporization zone, thus transferring hafnium tetrachloride gradually to a remaining small part vapor;

removing the vapor phase as enriched in hafnium tetrachloride from the system;

maintaining the pressure condition substantially throughout the vaporization; and

recovering from the vaporization zone zirconium tetrachloride substantially removed of hafnium content.

0045270

2. A process as recited in Claim 1, in which said temperature and pressure conditions are, respectively, above approximately 450°C and above 25 atms. for producing zirconium tetrachloride of a raised purity.

3. A process as recited in Claim 2, in which said temperature and pressure are 460°C and 33 atms., respectively.

4. A process as recited in Claim 1, in which said temperature and pressure conditions are above approximately 440°C and above 40 atms., for producing hafnium tetrachloride of substantially reduced zirconium content.

5. A process as recited in Claim 4, in which said temperature and pressure are 450°C and 50 atms.

6. A process as recited in Claim 1, in which said mixture of tetrachlorides is introduced to the system substantially at the vaporization zone.

7. A process as recited in Claim 1, in which said mixture of tetrachlorides is introduced to the system at an intermediate level of the condensation zone.

8. A process as recited in Claim 1, in which said vapor phase enriched in hafnium tetrachloride is continuously removed from the system.

9. A process as recited in Claim 1, in which said vapor phase enriched in hafnium tetrachloride is intermittently removed from the system.

26

10. A process for separation of zirconium- and hafnium tetrachlorides from a mixture comprising such deleterious chlorides as aluminium and/or iron chlorides in addition to said tetrachlorides, the process comprising:

treating said mixture of chlorides with at least one halide of alkaline metal, thus removing aluminum and iron chlorides from the mixture as combined with the halide;

introducing thus treated mixture into a closed distillation system;

heating at a vaporization zone the mixture, which exists as liquid at least partially, to a temperature of at least approximately 440°C under a pressure of at least 25 atms. to cause generation and upward flow of vapor;

at a condensation zone over said vaporization zone, continuously condensing and flow down a substantial part of upcoming vapor back to the vaporization zone, thus transferring hafnium tetrachloride gradually to a remaining small part of vapor;

removing the vapor phase as enriched in hafnium tetrachloride from the system;

maintaining the pressure condition substantially throughout the vaporization; and

recovering from the vaporization zone zirconium tetrachloride substantially removed of hafnium content.

11. A process as recited in Claim 10, in which said zirconium tetrachloride as recovered from the vaporization zone is treated with at least one halide of alkaline metal once again.

12. A process as recited in each of Claims 10 and 11, in which said halide is at least one selected from the group consisting of sodium-, potassium- and lithium chlorides, sodium- and potassium fluorides, and sodium- and potassium iodides.

13. A process as recited in Claim 12, said halides are sodium- and/or potassium chlorides.

14.    An apparatus for separation of zirconium- and hafnium
tetrachlorides from a mixture thereof, which apparatus comprises:

a vaporizer which consists substantially of a closed
pot provided with a heating means;

a condenser column of a substantially cylindrical
configuration which provides inwards a space for partial
condensation communicating at a lower end thereof with
said pot;

a colder face of a substantially cylindrical configuration and provided with a cooling means adjacent to-
and behind said face relative to the condensation space;

an enclosure of thermal insulative material for
the pot-column combination; and

flow-regulatable tube means each for feeding crude
chloride mixture, for vapor removal atop the column, and
for recovery of purified zirconium tetrachloride on the
pot; and

a pressure resistance means for the pot-column
combination.

15.    An apparatus as recited in Claim 14, in which said
colder face is provided on the condenser column to provide
a condensation space inside the colder face.

16.    An apparatus as recited in Claim 14, in which said colder face is provided inside- and spaced from the condenser column to form a condensation space outside the colder face.

17.    An apparatus as recited in Claim 15, in which said condensation space is spirally partitioned to provide an lengthened patch for fluids in the column.

18.    An apparatus as recited in Claim 16, in which said condensation space is provided with a spiral partition substantially all over the axial length.

19.    An apparatus as recited in Claim 18, in which said partition has a down slope towards an inside face of the condenser column so that condensate on the partition may effectively move towards - and along the column inner face.

20.    An apparatus as recited in each of Claims 14, 15 and 16, in which said cooling means for the colder face substantially consists in a cavity through which to forcibly pass a cold gas.

21.    An apparatus as recited in Claim 14, in which said condenser column and colder face are substantially straight-cylindrical.

22.    An apparatus as recited in Claim 14, in which said condenser column and colder face are substantially in a coaxial arrangement with a weak upward tapering.

23.    An apparatus as recited in Claim 14, in which said condenser column and colder face are substantially in a coaxial arrangement with a weak downward tapering.

24.    An apparatus as recited in Claim 14, in which said pressure resistance means substantially consists in a general stout construction of individual members.

25.    An apparatus as recited in Claim 14, in which said pressure resistance means substantially consists in provision of a stout container to hold inside the pot at least.

26.    An apparatus as recited in Claim 14, in which said pressure resistance means substantially consists in provision of a stout container to hold inside the pot, column and enclosure with tubings, said over-container being provided with a means for regulating a pressure inside.

F I G . 1

# FIG.2a

# FIG.2b

FIG.2d

FIG.2c

F I G. 2e

# F I G.3a　　F I G.3b　　F I G.3c

4

6

8

4

5

7

4

6

8

5/5

0045270

0045270

Application number

European Patent
Office

EUROPEAN SEARCH REPORT

EP 81 40 1226.6

## DOCUMENTS CONSIDERED TO·BE RELEVANT

| Category | Citation of document with indication, where appropriate, of relevant passages | Relevant to claim |
|---|---|---|
| D,X | US - A - 2 852 446 (M.L. BROMBERG)<br>* claims 1 to 3; fig. 2 *<br>--- | 1-5,<br>7,9,<br>14-16 |
| D | US - A - 3 856 477 (H. ISHIZUKA)<br>-- | |
| D | US - A - 2 744 060 (R.B. EATON)<br>-- | |
| | US - A - 3 098 722 (E.C. CARLSON et al.)<br>* claim 1 *<br>-- | 10-13 |
| | GB - A - 1 300 534 (H. ISHIZUKA)<br>* claims 1 to 4 *<br>--- | 10-13 |
| | DD - A - 88 514 (SOVIREL)<br>* pages 3 to 4 *<br>-- | 17,18 |
| | US - A - 3 233 389 (D.M. DAHLEN)<br>-- | 17 |
| A | FR - A - 1 537 218 (H. ISHIZUKA)<br>---- | |

**CLASSIFICATION OF THE APPLICATION (Int. Cl.³)**

C 01 G   25/04
C 01 G   27/04

**TECHNICAL FIELDS SEARCHED (Int. Cl.³)**

B 01 D - 3/00
C 01 G   25/00
C 01 G   27/00

**CATEGORY OF CITED DOCUMENTS**

X: particularly relevant
A: technological background
O: non-written disclosure .
P: intermediate document
T: theory or principle underlying
   the invention
E: conflicting application
D: document cited in the
   application
L: citation for other reasons

&: member of the same patent
   family,
   corresponding document

The present search report has been drawn up for all claims

| Place of search | Date of completion of the search | Examiner |
|---|---|---|
| Berlin | 13-10-1981 | KESTEN |

EPO Form 1503.1  06.78